# EUROPÄISCHE PATENTSCHRIFT

(11) **EP 1 594 207 B1**
(45) Veröffentlichungstag und Bekanntmachung des Hinweises auf die Patenterteilung: **16.05.2007**
(21) Anmeldenummer: 04010608.0
(22) Anmeldetag: 04.05.2004
(51) Int. Cl.: H02H 3/33

(54) **Schutzeinrichtung für Wechsel- und Gleich-fehlerströme**
Protection device for AC and DC leakage currents
Dispositif de protection pour courants de fuite alternatifs et continues

(43) Veröffentlichungstag der Anmeldung: 09.11.2005
(73) Patentinhaber: GEWISS S.p.A., 24069 Cenate Sotto (Bergamo) (IT)
(72) Erfinder: Laubisch, Ralf, 57489 Drolshagen (DE)
(74) Vertreter: Prechtel, Jörg

(56) Entgegenhaltungen:
- EP-A- 0 812 048
- FR-A- 2 526 598
- GB-A- 2 176 069

## Beschreibung

Die vorliegende Erfindung betrifft einen Strombegrenzungsschalter, insbesondere einen FI-Schalter, umfassend
- ein Schaltwerk, durch das eine Ausgangsseite des Strombegrenzungsschalters von einer Eingangsseite des Strombegrenzungsschalters elektrisch abkoppelbar ist,
- einen Stromwandler, durch den in Antwort auf einen im Stromwandler erfassten Fehler-Wechselstrom oder pulsierenden Fehler-Gleichstrom ein Fehlerstromsignal lieferbar ist, und
- einen Auslöser, der in Antwort auf das Liefern des Fehlerstromsignals eine Abkopplung durch das Schaltwerk auslöst.

Die Erfindung betrifft außerdem ein Verfahren zur Steuerung eines solchen Strombegrenzungsschalters.

Elektrische Sicherungseinrichtungen dienen zur Abkopplung von abwärts der Sicherungseinrichtung liegenden Stromkreisen vom Stromnetz, wenn an einer vorbestimmten Stelle innerhalb eines Stromkreises ein Fehlerstrom auftritt, d.h. wenn ein elektrischer Strom größer wird als ein vorbestimmter Wert, beispielsweise im Falle eines Kurzschlusses. Zur Absicherung gegenüber Kurzschlüssen zwischen stromführenden Teilen und nicht stromführenden Teilen (beispielsweise wenn Strom bei einem Kurzschluss über den Schutztleiter direkt abgeleitet wird) dienen sogenannte Fehlerstromschutzschalter (auch FI-Schalter genannt). Diese messen als Fehlerstrom die vorzeichenrichtige Summe der elektrischen Ströme in einer Hin- und Rückleitung vom Stromnetz zu einem Verbraucher. Überschreitet dieser Differenzstrom einen bestimmten Wert, trennt der FI-Schalter den Verbraucher allpolig vom Netz.

Bei Strombegrenzungsschaltern, bei denen eine Trennung von Verbrauchern vom Netz bereits durch vergleichsweise geringe Fehlerströme ausgelöst werden müssen (beispielsweise sollen FI-Schalter bei Fehler-Nennströmen zwischen 0,01 und 0,3 A eine Netztrennung auslösen) ist in der Regel der Fehlerstrom zu schwach, um direkt die gewünschte Abkopplung auslösen zu können. Stattdessen bewirkt das Erfassen eines vorbestimmten Fehlerstroms in einem Stromwandler eine Aktivierung eines Auslösestromkreises, durch die dann die Abkopplung vom Netz erfolgt.

Beispielsweise verfügen FI-Schalter zu diesem Zweck über einen sogenannten Summenstromwandler mit zwei identischen Primärwicklungen und einer Sekundärwicklung. Den beiden Primärwicklungen wird jeweils der vom Netz zum Verbraucher-Stromkreis fließende Strom sowie der vom Verbraucher-Stromkreis zum Netz zurückfließende Strom zugeführt. Solange im Verbraucherstromkreis kein Stromverlust, etwa bei einem Kurzschluss über den Schutzleiter, auftritt, ist die Summe der in den beiden Primärwicklungen in entgegengesetzter Richtung fließenden Ströme 0, so dass in der Sekundärwicklung des Summenstromwandlers keine Spannung induziert wird. Sobald sich die beiden in den Primärwicklungen fließenden Ströme nicht mehr gegenseitig aufheben, wird in der Sekundärwicklung eine der Stromdifferenz proportionale Spannung induziert, die als Fehlerstromsignal nach Überschreiten eines vorbestimmten Wertes zum Auslösen der Abkopplung durch den Auslösestrom führt.

Da bei diesen Schaltern eine Spannung in der Sekundärwicklung nur induziert wird, wenn ein elektrischer Wechselstrom oder pulsierender Gleichstrom vorliegt, sind diese Schalter prinzipbedingt unempfindlich gegenüber Gleichstromfehlern, so dass in Gleichstrom führenden Stromkreisen auftretende Fehlerströme nicht abgesichert werden können. Auch bei Fehlerströmen in Wechselstromkreisen mit einem höheren Gleichstromanteil lösen herkömmliche FI-Schalter häufig nur undefiniert aus.

Ein Fehlerstromschutzschalter gemäß dem Oberbegriff des Anspruchs 1 und das Verfahren zur seinen Steverung gemäss dem Oberbegriff des Anspruchs 12 ist aus der EP 0 812 048 A2 bekannt.

Aufgabe der vorliegenden Erfindung ist es, einen Strombegrenzungsschalter, insbesondere einen FI-Schalter, der genannten Art anzugeben, der bei Fehlerströmen unterschiedlichster Art zuverlässig eine Abkopplung der Verbraucherstromkreise vom Stromnetz bewirkt.

Erfindungsgemäß wird diese Aufgabe gelöst durch einen Strombegrenzungsschalter, insbesondere FI-Schalter, gemäß Anspruch 1.

Bei dem erfindungsgemäßen Strombegrenzungsschalter ist vorgesehen, dass das Fehlerstromsignal auch in Antwort auf einen im Stromwandler erfassten elektrischen Fehler-Gleichstrom lieferbar ist.

Der erfindungsgemäße Strombegrenzungsschalter ist derart ausgelegt, dass bei Vorliegen einer vorbestimmten Überstrombedingung unabhängig davon, ob der Überstrom ein Wechselstrom, pulsierender Gleichstrom, glatter Gleichstrom oder eine Kombination daraus ist, ein Fehlerstromsignal geliefert wird, welches eine allpolige Abkopplung der stromabwärts liegenden Verbraucher-Stromkreise vom Stromnetz auslöst. Dies wird erreicht, indem die herkömmlich bekannte rein induktive Erzeugung eines Fehlerstromsignals im Sekundärstromkreis des Stromwandlers ergänzt wird durch einen weiteren am Ausgang des Stromwandlers lieferbaren Signalanteil, der ein Maß ist für einen im Primärstromkreis des Stromwandlers erfassten glatten Fehler-Gleichstrom.

Der erfindungsgemäße Strombegrenzungsschalter lässt sich besonders günstig als FI-Schalter einsetzen, wobei der Stromwandler einen Summenstromwandler umfasst, der als Fehlerstrom eine Stromdifferenz zwischen einem einem ersten Primäranschluss des Summenstromwandlers zugeführten elektrischen Strom und einem einem zweiten Primäranschluss des Summenstromwandlers zugeführten elektrischen Strom erfasst, auf deren Grundlage das Fehlerstromsignal gebildet wird. Ein solcher FI-Schalter kann hierbei ohne weiteres in der herkömmlich bekannten Weise aufgebaut sein, bei der der Summenstromwandler eine mit seinem ersten Primäranschluss verbundene erste und eine mit seinem zweiten Primäranschluss verbundene zweite Primärwicklung aufweist, sowie eine Sekundärwicklung aufweist, in der ein der Stromdifferenz zwischen den Primärwicklungen entsprechendes Induktionssignal induziert wird, wobei die Wicklungen bevorzugt auf einen gemeinsamen ferromagnetischen Teil vorgesehen sind. Das Induktionssignal kann hierbei direkt als Aktivierungssignal dem Auslöser zugeführt werden. Dieser löst dann die Abkopplung aus, wenn das Induktionssignal einen vorbestimmten Wert überschreitet, so dass der FI-Schalter als rein passives Bauelement ohne eigene Stromversorgung (d.h. netzunabhängig) arbeitet.

Insbesondere zur Erfassung eines Fehler-Gleichstroms ist es günstig, wenn der Schalter, vorzugsweise der Stromwandler ein induktives Bauteil aufweist, dessen Induktivität vom Fehlerstrom beeinflussbar ist oder/und das das ferromagnetische Teil umfasst, wobei das induktive Bauteil - ggfs. nach Abkopplung vom Auslöser - Teil eines elektrischen Schwingkreises ist, dessen Schwingungsfrequenz erfassbar ist. Die Erfassung der Schwingungsfrequenz kann z.B. durch Anstoßen einer Schwingung und Erfassen des sich ergebenden Schwingungssignals erfolgen. Das Anstoßen der Schwingung kann durch im Wesentlichen einen einzelnen Impuls erfolgen, wodurch eine (gedämpfte) freie Schwingung des Schwingkreises mit einer charakteristischen Frequenz (der Resonanzfrequenz des Schwingkreises) erzeugt wird. Die Resonanzfrequenz hängt von der Induktivität des Schwingkreises ab, die wiederum im Wesentlichen durch das induktive Bauteil bestimmt wird. Verwendet man ein induktives Bauteil (z.B. eine Spule mit ferromagnetischem Kern oder den Stromwandler mit Primärwicklungen und Sekundärvorrichtung, die um einen gemeinsamen ferromagnetischen Kern angeordnet sind) dessen Induktivität sich verändert, wenn es von einem Fehlerstrom, insbesondere einem Fehlergleichstrom durchflossen wird, so kann die erfasste Schwingungsfrequenz als Grundlage für die Bestimmung des Fehlerstromsignals (gerade auch für Fehlergleichströme) dienen.

Alternativ kann ein periodisches Anstoßsignal verwendet werden, um die Schwingung anzustoßen, so dass eine erzwungene Schwingung entsteht. In diesem Fall existiert eine charakteristische Beziehung zwischen den Phasen des Signals der erzwungenen Schwingung und des Anstoßssignals, welche wiederum verwendet werden kann, um das Fehlerstromsignal zu erhalten, da diese Phasenbeziehung von dem Unterschied zwischen der Frequenz des Anstoßsignals und der Resonanzfrequenz des Schwingkreises abhängt, die sich nach Maßgabe des durch das induktive Bauteil fließenden Fehlerstroms ändert.

Häufig werden FI-Schalter zusätzlich oder alternativ als aktive Bauelemente netzabhängig betrieben. Dann ist eine Steuereinheit vorgesehen, durch die das vom Stromwandler gelieferte Signal auswertbar ist und nach Maßgabe des ausgewerteten Signals das Fehlerstromsignal zur Ansteuerung des Auslösers lieferbar ist. Der Vorteil solcher Schalteranordnungen besteht unter anderem darin, dass das im Stromwandler induzierte Signal durch die Steuereinheit entsprechend aufbearbeitet werden kann (z.B. durch entsprechende Filterung, Verstärkung, Glättung oder/und Integration über einen gewissen Zeitraum), bevor es als Fehlerstromsignal dem Auslöser zugeführt wird. Darüber hinaus kann durch die Steuereinheit eine entsprechend angepasste Auswertung des Signals erfolgen, beispielsweise indem durch die Steuereinheit bestimmte Auslösekriterien festgelegt und abgefragt werden. Eine Aktivierung des Auslösers erfolgt dann durch die Steuereinheit, wenn die entsprechend vorgesehenen Bedingungen erfüllt sind.

Die Steuereinheit kann zur Erfassung eines Fehler-Gleichstroms eingesetzt werden. Hierfür kann vorgesehen sein, dass durch die Steuereinheit der Schwingkreis kurzzeitig vom Auslöser elektrisch abkoppelbar ist, während dieser Zeit dem Schwingkreis ein elektrisches Prüfsignal zuführbar ist und ein durch das Prüfsignal im Schwingkreis ausgelöstes Schwingungssignal erfassbar ist. Der Stromwandler, insbesondere dessen Sekundärwicklungsstromkreis kann als elektrischer Schwingkreis angesehen werden mit einer durch die Induktivität des Stromwandlers d.h. im Wesentlichen die Induktivität der aus Sekundärwicklung und ferromagnetischem Kern gebildeten Spule sowie einer geeignet im Stromkreis vorzusehenden Kapazität bestimmten Resonanzfrequenz. Zur Erfassung eines Fehler-Gleichstroms - der nicht zu einem Induktionssignal in der Sekundärwicklung des Stromwandlers führt - kann die durch den Schwingkreis auf ein elektrisches Prüfsignal, z.B. einen Prüfimpuls, hin ausgeführte Schwingung ausgewertet werden, denn die Induktivität des Schwingkreises hängt ab von dem jeweils im Stromwandler (insbesondere durch die Primärwicklungen) fließenden elektrischen Strom, genauer gesagt von dem den Kern des Stromwandlers durchsetzenden magnetischen Fluss, der wiederum vom durch den Stromwandler fließenden elektrischen Strom bestimmt wird. Im Falle eines nicht vorhandenen Fehler-Gleichstroms ist die magnetische Flussdichte im Kern des Stromwandlers 0, ansonsten ist sie proportional zum Fehlerstrom. Dementsprechend ändert sich auch die Induktivität des Schwingkreises und damit die durch das Prüfsignal angeregte Schwingung. Wertet man dieses Schwingung aus, so kann ohne weiteres ein entsprechendes Auslösekriterium für das Vorliegen eines Fehler-Gleichstroms abgeprüft werden (z.B. die Frequenz der Schwingung).

Für eine zum Anregen und Auswerten der Schwingung ausreichend bemessene Zeitdauer kann der Stromwandler vom Auslöser abgekoppelt werden. Hierfür haben sich Zeitdauern von unter 100 ms, beispielsweise 10 bis 20 ms, als ausreichend erwiesen. Während der übrigen Zeit kann der FI-Schalter wie herkömmlich bekannt zur Erfassung von Fehler-Wechselströmen oder Fehlerströmen bei pulsierenden Gleichströmen verwendet werden.

Zur Anregung der Schwingung eignet sich ein impulsförmiges elektrisches Signal, das unmittelbar auf die Abkopplung hin dem Schwingkreis zugeführt wird. Durch ein solches Prüfsignal wird eine für den Schwingkreis (insbesondere dessen Induktivität) charakteristische gedämpfte Schwingung angeregt, die durch die Steuereinheit erfasst und ausgewertet werden kann.

Es ist zwar günstig, aber nicht unbedingt erforderlich, dass die Steuereinheit zur Erfassung des Fehler-Gleichstroms dieselbe ist, wie die Steuereinheit zur Auswertung des herkömmlichen Fehlerstromsignals und Steuerung des Auslösens durch den Auslöser.

Zur Erfassung des erzeugten Schwingungssignals kann dieses beispielsweise durch einen Operationsverstärker verstärkt werden und zur Auswertung einem entsprechenden Mikrokontroller mit A/D-Wandler zugeführt werden.

Aufgrund der kurzen Abkoppelzeit von wenigen ms im Falle des Einsatzes des Sekundärwicklungsstromkreises des Stromwandlers zur Erfassung des Fehler-Gleichstroms kann sogar dann ein Fehlerstrom für Gleichstrom (während der Abkoppelzeit) und ein Fehlerstrom für Wechselstrom bzw. pulsierenden Gleichstrom (während der übrigen Zeit) quasi gleichzeitig und unabhängig von einander erfasst werden. Die Erfassung eines Fehler-Wechselstroms kann sowohl in einer netzunabhängigen Betriebsart direkt über den Stromwandler und von diesem ausgelösten Auslöser erfolgen oder auch in einer netzabhängigen Betriebsart, bei der das induzierte Signal vom Stromwandler durch die Steuereinheit ausgewertet wird und von der Steuereinheit der Auslöser ausgelöst wird. Netzabhängiger Betrieb bedeutet hierbei, dass die Steuereinheit durch das Stromnetz selbst versorgt wird und daher der FI-Schalter nur arbeitet, wenn diese Stromversorgung funktioniert.

Falls gewünscht, kann bei der netzabhängigen Betriebsart die Betriebssicherheit noch erhöht werden, indem der FI-Schalter so ausgelegt wird, dass er zusätzlich zu dem netzabhängig erzeugten Fehlerstromsignal noch ein weiteres netzunabhängig erzeugtes Signal bereitstellt, auf das im Falle des Versagens des netzabhängig erzeugten Signals zurückgegriffen werden kann. Da für die Erfassung des Fehler-Gleichstroms ebenfalls eine elektrische Steuereinheit erforderlich ist, ist dieser Betriebsmodus grundsätzlich netzabhängig. Sollte eine vom Stromnetz unabhängige Erfassung gewünscht werden, so könnte ggf. an eine autarke Stromversorgung für die Steuereinheit, beispielsweise über eine Batterie, gedacht werden.

Zur Auswertung der durch das Prüfsignal angeregten Schwingung kann beispielsweise vorgesehen sein, dass durch die Steuereinheit die Frequenz des angeregten Schwingungssignals erfassbar ist. Diese Frequenz verändert sich charakteristisch mit einer Veränderung der Induktivität des Schwingkreises und ist somit ein direktes Maß für einen aufgrund einer entsprechenden Stromdifferenz in den Primärwicklungen des Stromwandlers fließenden Fehler-Gleichstrom. Kennt man die Resonanzfrequenz des Schwingkreises, wenn kein Fehler-Gleichstrom vorhanden ist, z.B. durch eine entsprechende Kalibrationsmessung so ergibt sich das Fehlerstromsignal für einen Gleichstrom nach Maßgabe der Veränderung der Frequenz der angeregten Schwingung.

Liegt allgemein ein Fehlerstrom vor, der sowohl einen durch Gleichstrom hervorgerufenen Anteil als auch einen durch Wechselstrom hervorgerufenen Anteil aufweist, so können beide Anteile unabhängig voneinander erfasst werden und dann zur Fehlerstromauswertung kombiniert werden bzw. kombiniert zur Festlegung vorbestimmter Auslösekriterien herangezogen werden, wobei das Fehlerstromsignal bzw. das Auslösekritierium in Abhängigkeit von der Frequenz des erfassten Schwingungssignals definiert ist.

Weiterhin kann - ohne dass größere bauliche Zusatzmaßnahmen erforderlich wären - vorgesehen sein, dass durch die Steuereinheit die Frequenz und Amplitude des vom Stromwandler oder/und Schwingkreis gelieferten Signals, insbesondere des durch einen Fehler-Wechselstrom hervorgerufenen Induktionssignals, erfassbar ist. Hierdurch kann der Schalter zusätzlich zur Erfassung von Fehlerstromsignalen bei anderen Frequenzen als der üblichen Netzfrequenz von 50 Hz, insbesondere zur Erfassung von Fehlerstromsignalen bei größeren Frequenzen bis zu 2 kHz, kalibriert werden. Insbesondere können für jede Frequenz vorbestimmte Schwellenwerte bzw. Verstärkungswerte für das Fehlerstromsignal festgelegt werden, so dass eine unterschiedliche Empfindlichkeit des Stromwandlers bei unterschiedlichen Frequenzen berücksichtigt (und falls notwendig kompensiert) werden kann. Wenn die Steuereinheit einen Mikroprozessor oder Mikrokontroller umfasst, können mit diesem unterschiedliche Voreinstellungen für jede Frequenz per Software definiert sein, so dass diese Einstellungen bzw. Änderungen anpassbar sind ohne Hardware-Änderungen vornehmen zu müssen. Dies ermöglicht gleichzeitig eine einfache und kontinuierliche Überwachung der Empfindlichkeit des Systems.

Durch den Auslöser kann eine Abkopplung auslösbar sein, wenn das Fehlerstromsignal einen vorbestimmten Wert überschreitet.

Durch die Erfindung wird ferner ein Verfahren zur Steuerung eines Strombegrenzungsschalters, insbesondere eines FI-Schalters, gemäß Anspruch 12 bereitgestellt.

Bei diesem Verfahren wird das Fehlerstromsignal auch in Antwort auf das Erfassen eines elektrischen Fehler-Gleichstroms im Stromwandler geliefert.

Beispielsweise kann ein beliebiger Fehlerstrom, insbesondere ein Fehler-Gleichstrom erfasst werden, indem nach Abkoppeln des Stromwandlers vom Auslöser die Schwingungsfrequenz eines Schwingkreises erfasst wird, der ein induktives Bauteil enthält, dessen Induktivität vom Fehlerstrom beeinflussbar ist.

Auch bei diesem Verfahren ist es günstig, wenn das vom Stromwandler gelieferte Signal in einer Steuereinheit ausgewertet wird und nach Maßgabe des ausgewerteten Signals das Fehlerstromsignal geliefert wird. Wie bereits ausgeführt, kann die Versorgung dieser Steuereinheit entweder über das Stromnetz (netzabhängiger Betrieb) oder autark (z.B. über eine Batterie) erfolgen.

Zur Erfassung eines Fehler-Gleichstroms kann durch die Steuereinheit der Schwingkreis kurzzeitig vom Auslöser elektrisch abgekoppelt werden, während dieser Zeit dem Schwingkreis (der vorzugsweise vom Stromwandler umfasst wird) ein elektrisches Prüfsignal zugeführt werden und daraufhin ein durch das Prüfsignal im Schwingkreis ausgelöstes Schwingungssignal durch die Steuereinheit erfasst werden. Wegen der Veränderung der Induktivität des induktiven Bauteils (z.B. der Sekundärwindung des Stromwandlers mit ferroelektrischem Kern, um den auch die Primärwicklungen gewickelt sind), verändert sich bei Vorliegen eines Fehler-Gleichstroms dieses Schwingungssignal, insbesondere verändert sich die Resonanzfrequenz dieses Schwingungssignals und kann durch die Steuereinheit erfasst werden. Das Fehlerstromsignal kann dann in Abhängigkeit der Frequenz des erfassten Schwingungssignals definiert werden, beispielsweise unmittelbar nach Maßgabe der Abweichung dieser Frequenz von der Frequenz des Schwingungssignals, wenn kein Fehler-Gleichstrom im Stromwandler vorliegt, oder bei gleichzeitigem Vorliegen eines Fehler-Gleichstroms und eines Fehler-Wechselstroms entsprechend dem jeweiligen Anteil nach Maßgabe der Abweichung der Schwingungsfrequenz bzw. nach Maßgabe des erfassten Induktionssignals.

Beispielsweise kann dem Schwingkreis auf das Abkoppeln unmittelbar folgend ein impulsförmiges elektrisches Prüfsignal zugeführt werden, durch das der Schwingkreis zu einer charakteristischen (gedämpften) Schwingung angeregt wird.

Die Steuereinheit kann die Frequenz des Schwingungssignals erfassen. Das Fehlerstromsignal kann abhängig von der Frequenz des erfassten Schwingungssignals definiert sein.

Darüber hinaus ist es günstig, wenn durch die Steuereinheit auch die Frequenz und Amplitude des vom Stromwandler oder/und vom Schwingkreis gelieferten Signals, insbesondere des Induktionssignals, erfasst wird. Durch diese Maßnahme kann der FI-Schalter zur Erfassung von Fehlerströmen mit von der herkömmlichen Netzfrequenz von 50 Hz abweichender Frequenz kalibriert werden. Es hat sich gezeigt, das hierdurch Fehlerströme bis 2 kHz erkannt werden können. Insbesondere kann einem Fehlerstrom einer bestimmten Frequenz eine ganz bestimmte Auslösegrenze zugeordnet werden. Dies kann per Software geschehen, so dass Änderungen dieser Einstellungen vorgenommen werden können, ohne dass Hardware-Änderungen erforderlich wären.

Der Auslöser kann derart ausgelegt sein, dass er eine Abkopplung immer dann auslöst, wenn das Fehlerstromsignal einen vorbestimmten Wert überschreitet. Alternativ kann, insbesondere dann, wenn eine elektrische Steuereinheit zur Auswertung des vom Fehlerstromwandler gelieferten Signals verwendet wird, diese auch so ausgelegt sein, dass sie ein Fehlerstromsignal nur dann abgibt, wenn erfasst wird, dass der Fehlerstrom einen vorbestimmten Wert überschreitet.

Die Erfindung wird im folgenden anhand eines bevorzugten Ausführungsbeispiels unter Bezugnahme auf die begleitenden Zeichnungen näher erläutert. Es zeigt:
- Figur 1: ein Blockschaltbild zur Erläuterung der Komponenten und deren Funktion eines erfindungsgemäßen Strombegrenzungsschalters (FI-Schalters),
- Figur 2: ein vereinfachtes Ersatzschaltbild eines Schaltkreises zur Bestimmung eines Fehler-Gleichstroms.

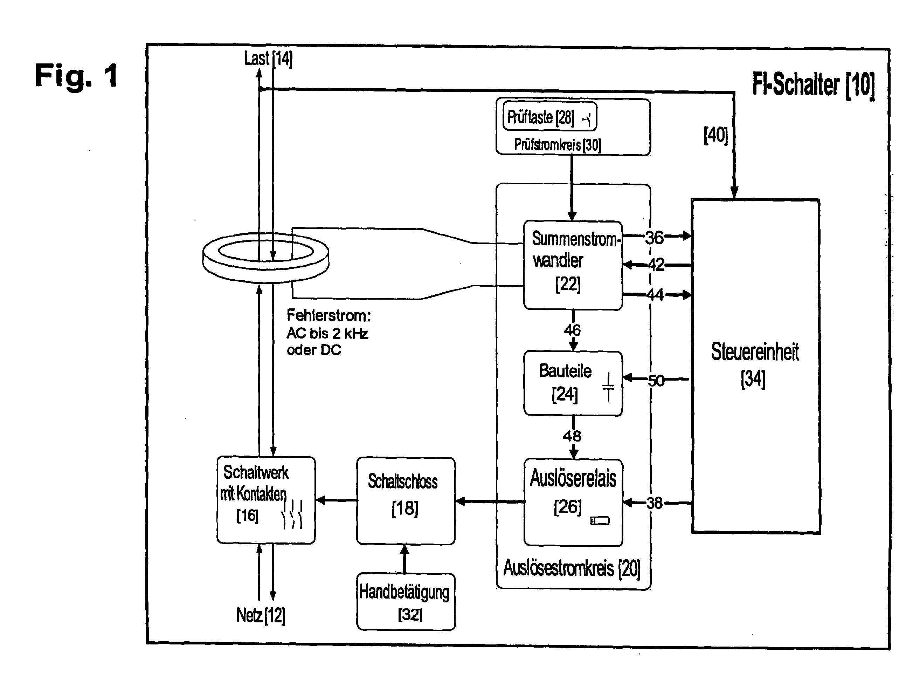

In Figur 1 ist das Blockdiagramm eines erfindungsgemäßen Fehlerstrombegrenzungsschalters (FI-Schalters) 10 gezeigt. Der FI-Schalter 10 ist in einem Stromkreis zwischen der Netzseite 12 und der Lastseite 14 angeordnet, so dass bei Auftreten eines Fehlerstroms auf der Lastseite 14 alle auf der Lastseite 14 liegenden elektrischen Geräte vom Stromnetz 12 allpolig abgekoppelt werden können. Hierfür dient ein im FI-Schalter 10 vorgesehenes Schaltwerk 16, das über entsprechend schaltbare Kontakte verfügt. Die Ansteuerung des Schaltwerks 16 erfolgt im FI-Schalter 10 über ein mechanisch mit dem Schaltwerk 16 verbundenes Schaltschloss 18 sowie einen dem Schaltschloss 18 vorgeschalteten Auslösestromkreis 20. Der Auslösestromkreis 20 umfasst einen Summenstromwandler 22, der über verschiedene elektrische Bauteile 24 (hauptsächlich Kondensatoren) mit einem Auslöserelais 26 (das den eigentlichen Auslöser realisiert) verbunden ist. Das Auslöserelais 26 stellt über einen mechanischen Stößel eine Verbindung zum Schaltschloss 18 her, wobei bei Beaufschlagung des Auslöserelais 26 mit einem entsprechenden elektrischen Signal der Stößel durch ein Induktionssignal mechanisch ausgelenkt wird. Die Auslenkung des Stößels bewirkt eine Verlagerung im Schaltschloss 18 von dessen Schließstellung zu dessen Öffnungsstellung, die schließlich auf das Schaltwerk 16 übertragen wird. Durch eine Öffnung des Schaltwerks 16 wird die Lastseite 14 allpolig vom Netz 12 abgetrennt.

Der an sich bekannte Summenstromwandler 22 ist als Differenzstromerfassungseinrichtung ausgebildet und erfasst eine Differenz zwischen dem vom Stromnetz 12 zur Lastseite 14 hin fließenden bzw. den von der Lastseite 14 zum Stromnetz 12 zurück fließenden elektrischen Strom. Wird ein solcher Differenzstrom (sog. "Fehlerstrom") vom Summenstromwandler 22 erfasst, so wird im Summenstromwandler in dessen Sekundärwicklung ein normalerweise relativ schwaches Induktionssignal erzeugt, mittels dem ein Schaltvorgang des Auslöserelais 26 ausgelöst werden muss. Die Funktion der elektrischen Bauteile 24 (hauptsächlich Kondensatorbauteile) ist es hauptsächlich, auf ein vom Summenstromwandler 22 empfangenes Eingangssignal (das durch Induktion in der Sekundärwicklung des Summenstromwandlers 22 erzeugte Signal) hin ein ausreichend starkes Ausgangssignal bereitzustellen und dem Auslöserelais 26 zuzuführen. Diese Betriebsweise (FI-Auslösung) eines FI-Schalters ist an sich herkömmlich bekannt. Es sei hierzu beispielsweise auf die deutsche Patentanmeldung Nr. 103 06 985.2 verwiesen.

Die soeben beschriebene FI-Betriebsweise, bei der der FI-Schalter über keinerlei eigene Spannungsversorgung verfügen muss, ist lediglich zur Erfassung eines Fehlerstroms bei Wechselströmen oder pulsierenden Gleichströmen geeignet, da das Fehlerstromsignal im Summenstromwandler durch Induktion erzeugt wird.

Bei dem FI-Schalter 10 ist eine Prüftaste 28 vorgesehen, bei deren Betätigung ein Fehlerstrom in einem Prüfstromkreis 30 künstlich erzeugt wird. Dieser künstlich erzeugte Fehlerstrom wird dem Summenstromwandler 22 zugeführt, der daraufhin bei korrekter Funktion des FI-Schalters 10 das Öffnen des Schaltwerks 16 auslöst. Als weitere Abschaltmöglichkeit ist eine Handbetätigung 32 vorgesehen, mittels derer direkt eine Verlagerung des Schaltschlosses 18 von seiner Schließstellung in seine Öffnungsstellung bewirkt werden kann, so dass die Lastseite 14 mit den darin angeordneten Verbrauchern jederzeit manuell vom Stromnetz 12 getrennt werden kann, unabhängig von der Funktionsfähigkeit des Auslösestromkreises 20.

Zusätzlich umfasst der FI-Schalter 10 eine elektrische Steuereinheit 34, die mit dem Auslösestromkreis 20 in Verbindung steht. Diese Steuereinheit umfasst die folgenden Funktionen: Erstens wird durch die Steuereinheit 34 eine weitere Betriebsweise des FI-Schalters 10 bereitgestellt, bei der das im Summenstromwandler 22 erfasste Induktionssignal 36 zunächst durch die Steuereinheit 34 empfangen und aufbereitet wird, und von der Steuereinheit 34 im Bedarfsfall ein Auslösesignal 38 für das Auslöserelais 26 erzeugt wird (sog. DI-Betriebsmodus). Darüber hinaus wird durch die Steuereinheit 34 ein weiterer Betriebsmodus realisiert, mittels dem die Erfassung eines Fehlerstroms für Gleichströme durch den Summenstromwandler 22 möglich wird. Diese Funktion wird im folgenden näher erläutert.

Im DI-Betriebsmodus wird das vom Summenstromwandler 22 abgegebene Fehlerstromsignal (Wechselstromsignal oder pulsierendes Gleichstromsignal) 36 in die Steuereinheit 34 eingegeben und dort aufbereitet, beispielsweise verstärkt, durch entsprechende Filter geglättet, von Driftspannungen befreit oder für eine gewisse Zeit integriert. Erst danach wird durch die Steuereinheit 34 entschieden, ob ein Auslösesignal 38 an das Auslöserelais 26 abgegeben werden soll. Der Vorteil dieser Betriebsweise liegt darin, dass die Bedingungen zum Übertragen des Auslösesignals 38 an das Auslöserelais 26 genauer eingestellt werden können als bei direkter Übertragung eines Fehlerstromssignals vom Summenstromwandler 22 über die Bauteilgruppe 24 an das Auslöserelais 26 (FI-Betriebsmodus). Der Nachteil des DI-Betriebsmodus besteht jedoch darin, dass in diesem Modus die Steuereinheit 34 über eine eigene Spannungsversorgung verfügen muss. Diese Spannungsversorgung wird in Figur 1 durch eine Verbindung 40 der Steuereinheit 34 mit der Lastseite 14 des Stromkreises erzielt. Aus diesem Grund ist Voraussetzung für den DI-Betriebsmodus, dass auf der Lastseite eine funktionierende Spannungsversorgung existiert. Für den Fall, dass diese Spannungsversorgung nicht zuverlässig gewährleistet ist, muss entweder auf den FI-Betriebsmodus zurückgegriffen werden, oder die Steuereinheit 34 mit einer autarken Spannungsquelle z.B. einer Batterie ausgerüstet werden.

Die zweite genannte Funktion der Steuereinheit 34 besteht darin, eine Erfassung von Fehler-Gleichströmen, d.h. einer Gleichstromdifferenz zwischen dem dem Summenstromwandler 22 von der Netzseite 12 her zufließenden und zu dem Summenstromwandler 22 von der Lastseite 14 her zurückfließenden Strom, erfassbar zu machen. Ein solcher Differenzgleichstrom zwischen den mit der Netzseite 12 verbundenen Primärwicklungen und den mit der Lastseite 14 verbundenen Primärwicklungen des Summenstromwandlers 22 führt nicht zur Erzeugung eines Induktionssignals in der Sekundärwicklung des Summenstromwandlers 22, über das normalerweise ein Fehlerstrom erfasst wird. Aus diesem Grund erfolgt bei dem FI-Schalter 10 die Erfassung eines Fehler-Gleichstroms dadurch, dass für eine kurze Zeit die Verbindung zwischen dem Summenstromwandler 22 und dem Auslöserelais 26 unterbrochen wird (z.B. zwischen dem Summenstromwandler 22 und der Bauteilgruppe 24 oder vorzugsweise zwischen Bauteilgruppe 24 und Auslöserelais 26). Dies kann durch ein Steuersignal 50 geschehen, das von der Steuereinheit 34 zur Bauteileinheit 24 geliefert wird. Während dieser Zeitdauer wird ein impulsförmiges Prüfsignal 42 an den Summenstromwandler 22 angelegt. Durch das Prüfsignal 42 wird im Summenstromwandler 22 bzw. in dem aus Sekundärwicklung des Summenstromwandlers 22 und Kondensatorteilen 24 gebildeten Schwingkreis ein Schwingungssignal ausgelöst, das durch die Steuereinheit über eine Verbindung 44 erfasst wird. Sobald das Schwingungssignal erfasst worden ist, wird das Auslöserelais 26 wieder mit dem Summenstromwandler 22 verbunden und der FI-Schalter 10 arbeitet wie herkömmlich bekannt. Die Dauer der Abkopplung muss ausreichend lang sein, um die Charakteristik der Schwingung, insbesondere deren Frequenz, erfassen zu können. Hierfür reichen in der Regel wenige ms, beispielsweise 10 bis 20 ms aus. Die Dauer der Abtrennung wird dabei so gewählt, dass sie nicht zu einer Überschreitung der geforderten Abschaltzeiten im Falle des Auftretens eines Fehler-Wechselstroms führt.

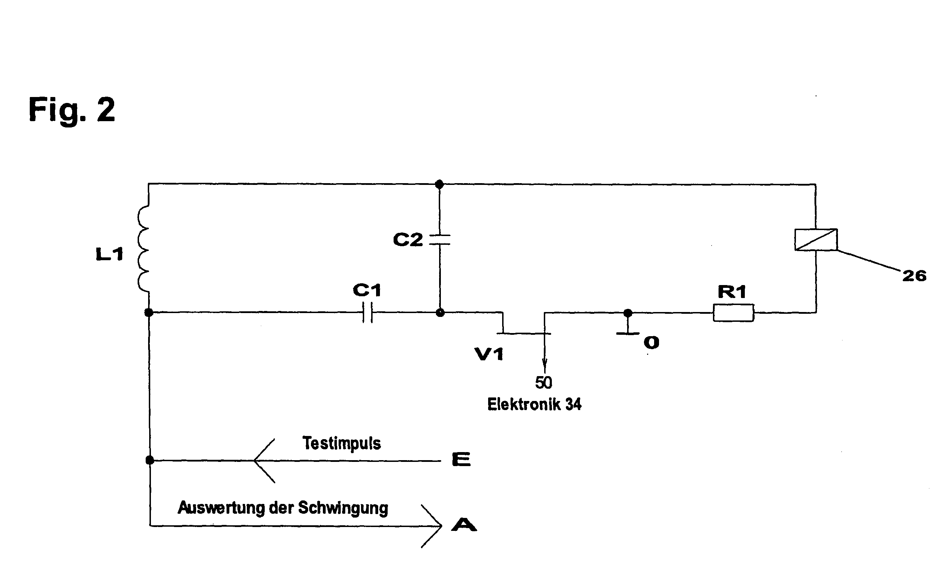

Die Funktionsweise der Erfassung eines Fehler-Gleichstroms wird unter Bezugnahme auf Figur 2 näher erläutert. Figur 2 zeigt in Form eines vereinfachten Ersatzschaltbildes den Schaltkreis, in dem zur Erfassung eines Fehler-Gleichstroms durch Aufschalten eines von der Steuereinheit 34 bereitgestellten impulsförmigen Prüfsignals (Testimpuls) am Anschluss E eine Schwingung erzeugt wird, die anschließend von der Steuereinheit 34 über den Anschluss A wieder erfasst und ausgewertet wird, d.h. insbesondere deren Frequenz durch die Steuereinheit 34 detektiert wird. Der in Figur 2 gezeigte Schaltkreis umfasst ein induktives Bauteil L1, das beispielsweise durch den Stromwandler (umfassend um einen ferromagnetischen Kern herum angeordnete Primär- und Sekundärwicklungen) gebildet sein kann, wobei ggf. noch weitere Bauteile zur Induktivität beitragen können. Die Induktivität des induktiven Bauteils (Ersatzspule) L1 hängt ab von der Anzahl der Wicklungen (z.B. der festen Anzahl von Sekundärwicklungen des Stromwandlers) sowie vom magnetischen Fluss innerhalb dieser Wicklungen, der im Wesentlichen durch den den Kern des Stromwandlers durchsetzenden magnetischen Fluss gegeben ist. Dieser wiederum wird erzeugt durch den in den Primärwicklungen des Stromwandlers fließenden Differenzstrom (also den Fehlerstrom). Dies bedeutet, dass die Induktivität des induktiven Bauteils L1 des Schwingkreises eine Funktion des im Stromwandler fließenden Differenzstroms ist. Der in Figur 2 gezeigte Stromkreis umfasst weiterhin zwei Kondensatoren C1 und C2, die z.B. durch die Bauteilgruppe 24 gebildet sein können, aber auch als zusätzliche geeignete Bauteile vorgesehen sein können.

Zur Erfassung eines Fehler-Gleichstroms trennt die Steuereinheit 34 das Auslöserelais 26 von dem durch die Kondensatoren C1 und C2 sowie die Induktivität L1 gebildeten Stromkreis für eine kurze Zeitdauer von 10 bis 20 ms ab (siehe das entsprechende Steuersignal 50 in Figur 1 und 2) und gibt gleichzeitig am Anschluss E ein impulsförmiges Prüfsignal aus. Dieses Prüfsignal wird an den Schaltkreis angelegt, der nun einen Schwingkreis bildet, dessen Resonanzfrequenz durch die Induktivität des induktiven Bauteils L1 sowie die beiden Kapazitäten C1 und C2 festgelegt ist. Die hierdurch angeregte Schwingung, insbesondere deren Frequenz, wird am Anschluss A durch die Steuereinheit 34 gemessen und ausgewertet.

Die Induktivität des induktiven Bauteils L1 hängt von dem magnetischen Fluss im Kern des Stromwandlers ab. Daher ändert sich die Frequenz der durch das Prüfsignal angestoßenen Schwingung abhängig von diesem magnetischen Fluss und ist somit ein direktes Signal für das Vorliegen eines Fehlerstroms, insbesondere eines Fehler-Gleichstroms. Wird daher die Abweichung der erfassten Schwingungsfrequenz von der Schwingungsfrequenz des Schwingkreises, wenn kein Fehlerstrom vorhanden ist, erfasst, so kann durch die Steuereinheit 34 eine entsprechende Auslösung des Auslöserelais 26 ausgelöst werden.

Über den Anschluss A kann kontinuierlich die Amplitude und Frequenz des im Summenstromwandler induzierten Fehlerstromsignals überwacht werden. Dadurch kann eine zuverlässige Überwachung von Fehlerstromsignalen bei unterschiedlichen Frequenzen realisiert werden, weil für unterschiedliche Frequenzen unterschiedliche Auslöseschwellen durch die Steuerelektronik 34 festgelegt werden können. Eine unterschiedliche Empfindlichkeit des Summenstromwandlers bei verschiedenen Frequenzen kann somit ohne weiteres berücksichtigt werden, so dass eine zuverlässige Absicherung gegenüber Fehlerströmen nicht nur bei der Standardnetzfrequenz von 50 Hz, sondern darüber hinaus bis zu Frequenzen von 2 kHz möglich wird. Der hier beschriebene FI-Schalter ist somit in der Lage, Fehlerströme mit beliebigen Anteilen von Gleichströmen, bzw. Wechselströmen unterschiedlicher Frequenzen zuverlässig zu erkennen.

## Patentansprüche

1. Strombegrenzungsschalter, insbesondere FI-Schalter (10), umfassend
- ein Schaltwerk (16), durch das eine Ausgangsseite (14) des Strombegrenzungsschalters von einer Eingangsseite (12) des Strombegrenzungsschalters elektrisch abkoppelbar ist,
- einen Stromwandler (22), durch den in Antwort auf einen im Stromwandler (22) erfassten Fehler-Wechselstrom, pulsierenden Fehler-Gleichstrom oder Fehler-Gleichstrom ein Fehlerstromsignal (38; 48) lieferbar ist, und
- einen Auslöser (26), der in Antwort auf das Liefern des Fehlerstromsignals (38; 48) eine Abkopplung durch das Schaltwerk (16) auslöst,
wobei der Stromwandler (22) ein induktives Bauteil (L1) mit vom Fehlerstrom beeinflussbarer Induktivität aufweist, das Teil eines elektrischen Schwingkreises ist,
**dadurch gekennzeichnet, dass** durch eine Steuereinheit (34) der Schwingkreis kurzzeitig vom Auslöser (26) elektrisch abkoppelbar ist, während dieser Zeit dem Schwingkreis ein elektrisches Prüfsignal (42) zuführbar ist und ein durch das Prüfsignal im Stromwandler ausgelöstes Schwingungssignal erfassbar ist.

2. Strombegrenzungsschalter nach Anspruch 1, **dadurch gekennzeichnet, dass** der Stromwandler (22) einen Summenstromwandler umfasst, der als Fehlerstrom eine Stromdifferenz zwischen einem einem ersten Primäranschluss des Summenstromwandlers zugeführten elektrischen Strom und einem einem zweiten Primäranschluss des Summenstromwandlers zugeführten elektrischen Strom erfasst, auf deren Grundlage das Fehlerstromsignal (38; 48) gebildet wird.

3. Strombegrenzungsschalter nach Anspruch 2, **dadurch gekennzeichnet, dass** der Summenstromwandler (22) eine mit seinem ersten Primäranschluss verbundene erste und eine mit seinem zweiten Primäranschluss verbundene zweite Primärwicklung aufweist sowie eine Sekundärwicklung aufweist, in der ein der Stromdifferenz zwischen den beiden Primärwicklungen entsprechendes Induktionssignal induziert wird, wobei die Wicklungen bevorzugt auf einem gemeinsamen ferromagnetischen Teil vorgesehen sind.

4. Strombegrenzungsschalter nach Anspruch 3, **dadurch gekennzeichnet, dass** das induktive Bauteil (L1) das ferromagnetische Teil umfasst.

5. Strombegrenzungsschalter nach einem der Ansprüche 1 bis 4, **dadurch gekennzeichnet, dass** durch die Steuereinheit (34) das vom Stromwandler (22) gelieferte Signal (36; 44) auswertbar ist und nach Maßgabe des ausgewerteten Signals (36; 44) das Fehlerstromsignal (38) zur Ansteuerung des Auslösers (26) lieferbar ist.

6. Strombegrenzungsschalter nach einem der Ansprüche 1 bis 5, **dadurch gekennzeichnet, dass** der Schwingkreis für eine Zeitdauer kleiner als 100ms, vorzugsweise zwischen 10 und 20ms, vom Auslöser (26) abkoppelbar ist.

7. Strombegrenzungsschalter nach einem der Ansprüche 1 bis 6, **dadurch gekennzeichnet, dass** das Prüfsignal (42) impulsförmig ist.

8. Strombegrenzungsschalter nach einem der Ansprüche 1 bis 7, **dadurch gekennzeichnet, dass** durch die Steuereinheit (34) die Frequenz des Schwingungssignals (44) erfassbar ist.

9. Strombegrenzungsschalter nach Anspruch 8, **dadurch gekennzeichnet, dass** das Fehlerstromsignal (38) in Abhängigkeit von der Frequenz des erfassten Schwingungssignals (44) definiert ist.

10. Strombegrenzungsschalter nach einem der Ansprüche 1 bis 9, **dadurch gekennzeichnet, dass** durch die Steuereinheit (34) die Frequenz und Amplitude des vom Stromwandler (22) oder/und vom Schwingkreis gelieferten Signals (36; 44) erfassbar ist.

11. Strombegrenzungsschalter nach einem der Ansprüche 1 bis 10,
**dadurch gekennzeichnet, dass** durch den Auslöser (26) eine Abkopplung auslösbar ist, wenn das Fehlerstromsignal (36; 48) einen vorbestimmten Wert überschreitet.

12. Verfahren zur Steuerung eines Strombegrenzungsschalters, insbesondere eines FI-Schalters (10), nach einem der vorangehenden Ansprüche, umfassend die Schritte
- Liefern eines Fehlerstromsignals (38;48) in Antwort auf das Erfassen eines elektrischen Fehler-Wechselstroms, pulsierenden Fehler-Gleichstroms oder Fehler-Gleichstroms in einem Stromwandler (22) und
- Auslösen einer elektrischen Abkopplung einer Ausgangsseite (14) des Strombegrenzungsschalters von einer Eingangsseite (12) des Strombegrenzungsschalters in Antwort auf das Fehlerstromsignal (38; 48),
**dadurch gekennzeichnet, dass** durch eine Steuereinheit (34) ein Schwingkreis, der ein induktives Bauteil (L1) mit vom Fehlerstrom beeinflussbarer Induktivität enthält, kurzzeitig vom Auslöser (26) elektrisch abgekoppelt wird, während dieser Zeit dem Schwingkreis ein elektrisches Prüfsignal (42) zugeführt wird und ein durch das Prüfsignal (42) im Schwingkreis ausgelöstes Schwingungssignal (44) erfasst wird.

13. Verfahren nach Anspruch 12, **dadurch gekennzeichnet, dass** der Schwingkreis für eine Zeitdauer kleiner als 100ms, vorzugsweise zwischen 10-20ms, vom Auslöser abgekoppelt wird.

14. Verfahren nach Anspruch 12 oder 13, **dadurch gekennzeichnet, dass** dem Stromwandler unmittelbar auf das Abkoppeln hin ein impulsförmiges elektrisches Prüfsignal (42) zugeführt wird.

15. Verfahren nach einem der Ansprüche 12 bis 14, **dadurch gekennzeichnet, dass** durch die Steuereinheit (34) die Frequenz des Schwingungssignals (44) erfasst wird.

16. Verfahren nach Anspruch 15, **dadurch gekennzeichnet, dass** das Fehlerstromsignal (38) in Abhängigkeit von der Frequenz des erfassten Schwingungssignals (44) definiert wird.

17. Verfahren nach einem der Ansprüche 12 bis 16, **dadurch gekennzeichnet, dass** das vom Stromwandler (22) gelieferte Signal (36; 44) in einer Steuereinheit (34) ausgewertet wird und nach Maßgabe des ausgewerteten Signals das Fehlerstromsignal (38) geliefert wird.

18. Verfahren nach einem der Ansprüche 12 bis 17, **dadurch gekennzeichnet, dass** durch Steuereinheit (34) die Frequenz und Amplitude des vom Stromwandler gelieferten Signals (36; 44) erfasst wird.

19. Verfahren nach einem der Ansprüche 12 bis 18, **dadurch gekennzeichnet, dass** eine Abkopplung ausgelöst wird, wenn das Fehlerstromsignal (38; 48) einen vorbestimmten Wert überschreitet.

## Claims

1. A current limiting circuit breaker, particularly a residual current circuit breaker (10), comprising:
• a cut-off assembly (16) by which an output side (14) of said current limiting circuit breaker can be disconnected electrically from an input side (12) of said current limiting circuit breaker,
• a current transformer (22) by which a residual current signal (38; 48) can be supplied in response to occurrence in said current transformer (22) of any of a residual alternating current, residual pulsating direct current or residual direct current, and
• a tripping device (26) which in response to supply of said residual current signal (38; 48) causes said cut-off assembly (16, 18) to perform a disconnection operation,
said current transformer (22) including an inductive component (L1) the inductance of which can be influenced by said residual current, said inductive component being part of an electrical resonance circuit,
**characterized in that** by means of a control unit (34) said resonance circuit is disconnectable electrically from said tripping device (26) for a short period of time, while during said short period of time an electrical test signal (42) can be supplied to said resonance circuit and an oscillation signal triggered by said test signal in said resonance circuit can be detected.

2. A current limiting circuit breaker according to claim 1, **characterized in that** said current transformer (22) comprises a summation current transformer detecting as a residual current a differential current between an electrical current supplied to a first primary terminal of the summation current transformer and an electrical current supplied to a second primary terminal of the summation current transformer, said residual current signal (38; 48) being formed on the basis of said differential current.

3. A current limiting circuit breaker according to claim 2, **characterized in that** said summation current transformer (22) has a first primary winding connected with its first primary terminal and a second primary winding connected with its second primary terminal, and further has a secondary winding in which an induction signal is induced according to said differential current between said first and second primary windings, said windings preferably being provided on a common ferromagnetic part.

4. A current limiting circuit breaker according to claim 3, **characterized in that** said inductive component (L1) comprises said ferromagnetic part.

5. A current limiting circuit breaker according to any of claims 1 to 4, **characterized in that** said signal (36; 44) supplied by said current transformer (22) can be evaluated by said control unit (34), and according to the evaluation of said signal (36; 44) said residual current signal (38) can be supplied for triggering said tripping device (26).

6. A current limiting circuit breaker according to any of claims 1 to 5, **characterized in that** said resonance circuit is disconnectable from said tripping device (26) for a time period shorter than 100 ms, preferably for a time period between 10 and 20 ms.

7. A current limiting circuit breaker according any of claims 1 to 6, **characterized in that** said test signal (42) is a pulsed signal.

8. A current limiting circuit breaker according to any of claims 1 to 7, **characterized in that** the frequency of said oscillation signal (44) is detectable by said control unit (34).

9. A current limiting circuit breaker according to claim 8, **characterized in that** said residual current signal (38) is defined in dependence on the frequency of said detected oscillation signal (44).

10. A current limiting circuit breaker according to any of claims 1 to 9, **characterized in that** by means of said control unit (34) the frequency and the amplitude of said signal (36; 44) supplied by said current transformer (22) or/and said resonant circuit is detectable.

11. A current limiting circuit breaker according to any of claims 1 to 10, **characterized in that** by means of said tripping device (26) a disconnection can be triggered, in case the residual current signal (36, 48) exceeds a predetermined value.

12. A method of controlling a current limiting circuit breaker, particularly a residual current circuit breaker (10), according to any of the preceding claims, the method comprising the steps:
• supplying a residual current signal (38; 48) in response to detection of any of a residual alternating current, a residual pulsating direct current or a residual direct current in a current transformer (22), and
• in response to said residual current signal (38; 48) triggering an electrical disconnection operation of an output side (14) of the current limiting circuit breaker from an input side (12) of the current limiting circuit breaker,
**characterized in that** said by means of a control unit (34) a resonance circuit including an inductive component (L1) the inductance of which can be influenced by said residual current is disconnected electrically from said tripping device (26) for a short period of time, while during said short period of time an electrical test signal (42) is supplied to said resonance circuit and an oscillation signal triggered by said test signal in said resonance circuit is detected.

13. A method according to claim 12, **characterized in that** the resonance circuit is disconnected from said tripping device for a time period less than 100 ms, preferably for a time period between 10 and 20 ms.

14. A method according to claim 12 or 13, **characterized in that** a pulsed electrical test signal (42) is supplied to said current transformer immediately following said disconnection operation.

15. A method according to any of claims 12 to 14, **characterized in that** the frequency of said oscillation signal (44) is detected by said control unit (34).

16. A method according to claim 15, **characterized in that** said residual current signal (38) is defined in dependence on the frequency of said detected oscillation signal (44).

17. A method according to any of claims claim 12 to 16, **characterized in that** said said signal (36; 44) supplied from said current transformer (22) is evaluated in a control unit (34), and according to said evaluated signal said residual current signal (38) is supplied.

18. A method according to any of claims claim 12 to 17, **characterized in that** the frequency and the amplitude of said signal (36; 44) supplied by said current transformer (22) is detected by said control unit (34).

19. A method according to any of claims 12 to 18, **characterized in that** a disconnection operation is triggered in case said residual current signal (38; 48) exceeds a predetermined value.

## Revendications

1. Commutateur de limitation de courant, en particulier disjoncteur différentiel (10), comprenant
- un organe de commutation (16), par lequel un côté de sortie (14) du commutateur de limitation de courant peut être dissocié électriquement d'un côté d'entrée (12) du commutateur de limitation de courant,
- un convertisseur de courant (22), par lequel un signal de courant de défaut (38 ; 48) peut être fourni en réponse à un courant alternatif de défaut détecté dans le convertisseur de courant (22), un courant continu de défaut pulsatoire ou un courant continu de défaut, et
- un déclencheur (26), qui déclenche un découplage par l'organe de commutation (16) en réponse à la fourniture du signal du courant de défaut (38 ; 48),
le convertisseur de courant (22) présentant un composant (L1) inductif avec une inductance pouvant être influencée par le courant de défaut, qui fait partie d'un circuit oscillant électrique,
**caractérisé en ce que** le circuit oscillant peut être dissocié électriquement du déclencheur (26) pendant une courte durée par une unité de commande (34), un signal de test (42) électrique peut être amené pendant ce temps au circuit oscillant et un signal d'oscillation déclenché par le signal de test dans le convertisseur de courant peut être détecté.

2. Commutateur de limitation de courant selon la revendication 1, **caractérisé en ce que** le convertisseur de courant (22) comprend un convertisseur de courant cumulé, qui détecte comme courant de défaut une différence de courant entre un courant électrique amené à un premier branchement primaire du convertisseur de courant cumulé et un courant électrique amené à un second branchement primaire du convertisseur de courant cumulé, sur la base de laquelle le signal de courant de défaut (38 ; 48) est formé.

3. Commutateur de limitation de courant selon la revendication 2, **caractérisé en ce que** le convertisseur de courant cumulé (22) présente un premier enroulement primaire relié à son premier branchement primaire et un second enroulement primaire relié à son second branchement primaire et présente un enroulement secondaire, dans lequel une différence de courant dans lequel un signa! d'induction correspondant à la différence de courant entre les deux enroulements primaires est induit, les enroulements étant prévus de préférence sur une partie ferromagnétique commune.

4. Commutateur de limitation de courant selon la revendication 3, **caractérisé en ce que** le composant (L1) inductif comprend la partie ferromagnétique.

5. Commutateur de limitation de courant selon l'une quelconque des revendications 1 à 4, **caractérisé en ce que** le signal (36 ; 44) fourni par le convertisseur de courant (22) peut être analysé par l'unité de commande (34) et le signal de courant de défaut (38) pour l'activation du déclencheur (26) peut être fourni en fonction du signal (36 ; 44) analysé.

6. Commutateur de limitation de courant selon l'une quelconque des revendications 1 à 5, **caractérisé en ce que** le circuit oscillant peut être dissocié du déclencheur (26) pour une durée inférieure à 100 ms, de préférence entre 10 et 20 ms.

7. Commutateur de limitation de courant selon l'une quelconque des revendications 1 à 6, **caractérisé en ce que** le signal de test (42) est en forme d'impulsion.

8. Commutateur de limitation de courant selon l'une quelconque des revendications 1 à 7, **caractérisé en ce que** la fréquence du signal d'oscillation (44) peut être détectée par l'unité de commande (34).

9. Commutateur de limitation de courant selon la revendication 8, **caractérisé en ce que** le signal de courant de défaut (38) est défini en fonction de la fréquence du signal d'oscillation (44) détecté.

10. Commutateur de limitation de courant selon l'une quelconque des revendications 1 à 9, **caractérisé en ce que** la fréquence et l'amplitude du signal (36 ; 44) fourni par le convertisseur de courant (22) et/ou par le circuit oscillant peuvent être détectées par l'unité de commande (34).

11. Commutateur de limitation de courant selon l'une quelconque des revendications 1 à 10, **caractérisé en ce qu'**un découplage peut être déclenché par le déclencheur (26) lorsque le signal de courant de défaut (36 ; 48) dépasse une valeur prédéfinie.

12. Procédé pour commander un commutateur de limitation de courant, en particulier un disjoncteur différentiel (10), selon l'une quelconque des revendications précédentes, comprenant les étapes suivantes
- livraison d'un signal de courant de défaut (38 ; 48) en réponse à la détection d'un courant alternatif de défaut électrique, d'un courant continu de défaut pulsatoire ou d'un courant continu de défaut dans un convertisseur de courant (22) et
- déclenchement d'un découplage électrique d'un côté de sortie (14) du commutateur de limitation de courant d'un côté d'entrée (12) du commutateur de limitation de courant en réponse au signal de courant de défaut (38 ; 48),
**caractérisé en ce qu'**un circuit oscillant, qui contient un composant (L1) inductif avec une inductance pouvant être influencée par le courant de défaut, est dissocié électriquement pendant un court instant du déclencheur (26) par une unité de commande (34), un signal de test (42) électrique est amené au circuit oscillant pendant ce temps et un circuit d'oscillation (44) déclenché par le signal de test (42) dans le circuit oscillant est détecté.

13. Procédé selon la revendication 12, **caractérisé en ce que** le circuit oscillant est dissocié du déclencheur pour un court instant inférieur à 100 ms, de préférence entre 10 et 20 ms.

14. Procédé selon la revendication 12 ou 13, **caractérisé en ce qu'**un signal de test (42) électrique de forme impulsionnelle est amené au convertisseur de courant directement en direction de la dissociation.

15. Procédé selon l'une quelconque des revendications 12 à 14, **caractérisé en ce que** la fréquence du signal d'oscillation (44) est détecté par l'unité de commande (34).

16. Procédé selon la revendication 15, **caractérisé en ce que** le signal de courant de défaut (38) est défini en fonction de la fréquence du signal d'oscillation (44) détecté.

17. Procédé selon l'une quelconque des revendications 12 à 16, **caractérisé en ce que** le signal (36 ; 44) fourni par le convertisseur de courant (22) est analysé dans une unité de commande (34) et le signal de courant de défaut (38) est fourni en fonction du signal analysé.

18. Procédé selon l'une quelconque des revendications 12 à 17, **caractérisé en ce que** la fréquence et l'amplitude du signal (36 ; 44) fourni par le convertisseur de courant est détecté par l'unité de commande (34).

19. Procédé selon l'une quelconque des revendications 12 à 18, **caractérisé en ce qu'**une dissociation est déclenchée lorsque le signal de courant de défaut (38 ; 48) dépasse une valeur prédéfinie.
